Europäisches Patentamt

European Patent Office

Office européen des brevets

(19)

(11) Publication number: **0 011 986**
**B1**

(12) **EUROPEAN PATENT SPECIFICATION**

(45) Date of publication of patent specification: **22.12.82**

(51) Int. Cl.³: **F 16 H 7/02, F 16 G 5/20**

(21) Application number: **79302657.6**

(22) Date of filing: **21.11.79**

(54) Drive power transmission system.

(30) Priority: **27.11.78 JP 163633/78**

(43) Date of publication of application:
**11.06.80 Bulletin 80/12**

(45) Publication of the grant of the patent:
**22.12.82 Bulletin 82/51**

(84) Designated Contracting States:
**DE GB IT**

(56) References cited:
**DE - A - 1 922 808**
**DE - A - 2 438 815**
**DE - C - 1 189 350**
**US - A - 2 073 668**
**US - A - 2 296 740**
**US - A - 3 404 577**
**US - A - 3 603 296**
**US - A - 3 643 518**
**US - A - 3 951 006**
**US - A - 4 028 955**
**US - A - 4 031 761**
**US - A - 4 047 446**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Imamura, Junji**
**No. 501-20 Minbudani Shioya-cho Tarumi-ku**
**Kobe-shi, Hyogo (JP)**

(74) Representative: **Corfield, Peter Ralph et al,**
**MARKS & CLERK Alpha Tower, ATV Centre**
**Birmingham B1 1TT (GB)**

(56) References cited:
**Patents Abstracts of Japan Vol. 1, No. 115, 30**
**September 1977, page 3688M77**

Courier Press, Leamington Spa, England.

Drive power transmission system

This invention relates to drive systems which include power transmission belts, and more particularly to a drive system in which a ribbed belt has a tension section, a neutral axis section and a compression section. The outer surface of the belt which is the upper surface of the tension section is at least initially flat. The compression section, which is the inner surface of the belt has a plurality of ribs arranged longitudinally thereof. One way in which this may be constructed is to provide a plurality of V-belt bodies having trapezoidal section arranged in parallel and separately from one another and a tie band of rubbered fabric or rubber cord fabric is laid over the upper surfaces of the V-belt bodies to connect them. The power transmission belt is laid in a serpentine path over a driving pulley and a plurality of driven pulleys.

Heretofore, in V-belt drive systems for an automobile, V-belts are, in general, laid over a crank pulley, an alternator pulley and a fan pulley, over a crank pulley and a power steering pulley, and over a crank pulley and a coolant pump pulley, respectively. In this way several belts are used in one automobile.

However, a system in which only one ribbed belt is laid in serpentine manner over such pulleys to drive the latter has been proposed and is being put in actual use (See: U.S. Patent Nos. 3,951,006, 4,031,761 and 4,028,955).

These known drive systems utilize the technological merits of a ribbed belt which is thin and flexible. In such a drive system, the generally falt outer surface or the ribbed inner surface of one ribbed belt are selectively brought into contact with a crank pulley, a fan pulley, a power steering pulley, an alternator pulley, a coolant pump pulley, etc., and an idler pulley is sometimes provided to give a predetermined tension to the belt. The ribbed belt is laid in a serpentine manner over these pulleys. Among these pulleys, at least one pulley, for instance the fan pulley is driven by the outer surface of the belt.

Such a drive system is advantageous over the drive system in which several belts are laid over pulleys in the following respects:

(1) Since the width of the pulleys can be reduced, the space in the automobile can be effectively utilized, and the weight of the automobile can be reduced.

(2) Since the ribbed belt is more flexible than a V-belt, the amount of energy consumed for driving the belt can be reduced, and accordingly, the fuel consumption is reduced.

(3) Since the tension of the belt is adjusted by an idler pulley, fluctuation of the belt tensions is less, and therefore the belt is not so susceptible to breakage.

(4) Since only one belt is laid over the pulleys, if the belt is broken, it can be readily replaced with a new one.

However, the disadvantage of this conventional drive system resides in the use of the flat pulley. Since the flat pulley has no pulley groove, the belt is liable to shift transversely on the pulley, which may non-uniformly wear the belt and cause abnormal sounds.

The rib thickness of the ribbed belt is about less than half the thickness of a V-belt. Therefore, if the belt is vibrated, then the ribs of the belt are disengaged from the grooves of the pulley. Therefore the belt is transversely shifted on the pulley and in an extreme case, it may come off the pulley.

Accordingly, an object of this invention is to tend to eliminate all of the drawbacks accompanying conventional drive systems, including transverse shifting of the ribbed belt or the banded belt during running tends to be prevented and non-uniform wear of the belt and the generation of abnormal sound is restricted, the belt being also prevented from coming off the pulley.

According to the invention there is provided a drive system including a driving pulley, a plurality of driven pulleys and an endless power transmission belt having outer and inner surfaces said belt being laid in a serpentine path over said pulleys, the driving pulley and at least one driven pulley being in contact with the inner surface of said power transmission belt, said pulleys in contact with the inner surface having a plurality of V-grooves arranged circumferentially, each of said V-grooves engaged by ribs formed on the inner surface of said belt and the remaining pulley or pulleys engaging with the outer surface of said power transmission belt, characterised in that the or each of said remaining pulleys which engage the outer surface of the belt has a plurality of axially spaced circumferential projections on its belt engaging surface, said projections being of semi-circular cross-sectional shape and the outer surface of the belt engaging therewith being initially substantially flat.

This invention will be described by way of example with reference to the accompanying drawings in which:

Fig. 1 is an explanatory diagram showing a preferred embodiment of a drive system including a power transmission belt constructed in accordance with this invention;

Fig. 2 is a sectional view taken along line X—X' in Fig. 1 showing a pulley over which the belt runs with its inner surface in contact therewith and showing a form of belt, and

Fig. 3 is a sectional view of another form of belt used in the system;

Fig. 4 is a sectional view taken along line Y—Y' in Fig. 1, showing a pulley over which the belt runs with its outer surface in contact therewith.

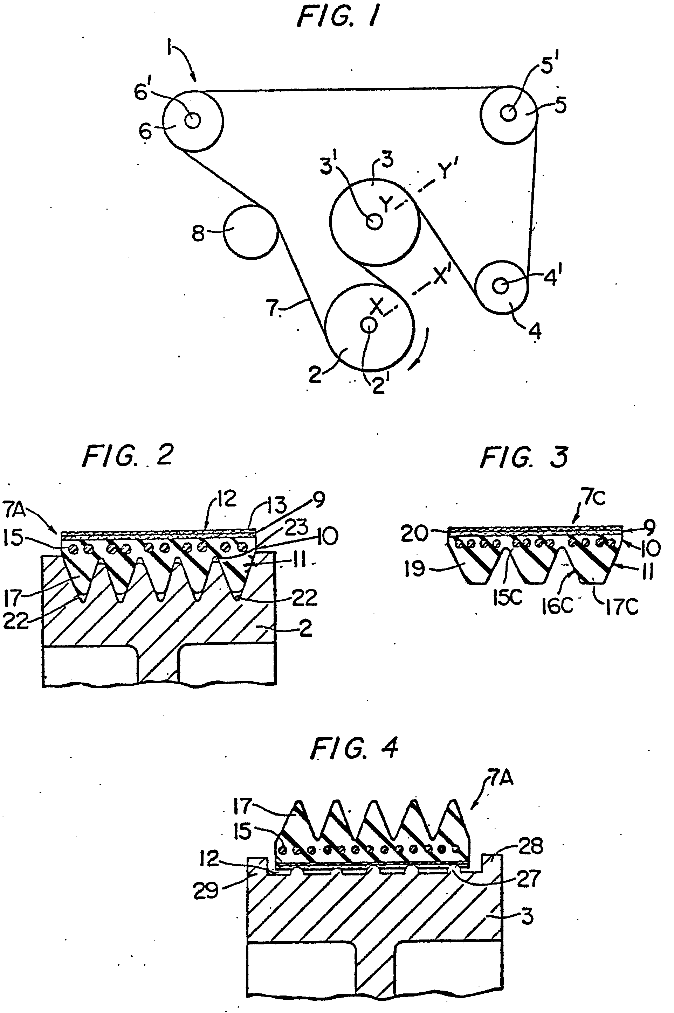

Fig. 1 shows a drive system including a power transmission belt for use in an automobile engine. Driven pulleys, such as a fan pulley 3, a power steering pulley 4, an alternator pulley 5 and a coolant pump pulley 6 are arranged around a driving pulley, which may be a crank pulley 2, according to the location of equipment on the engine. The power transmission belt 7 is laid in engagement over these pulleys. A predetermined tension is applied to the power transmission belt 7 by a tension or idler pulley 8 coupled to a tension device (not illustrated).

The shafts 2', 3', 4', 5' and 6' of pulleys 2, 3, 4, 5 and 6 are arranged in parallel with one another, and the belt engaging surfaces of the pulleys are in the same plane. These surfaces of the pulleys 2, 4, 5 and 6 are in contact with the inner surface of the power transmission belt 7, and the surface of the pulley 3 is in contact with the outer surface of the belt. If the shafts are not in parallel or, slightly displaced relative to each other, then the power transmission belt 7 will be non-uniformly worn or will come off the pulleys.

The fan pulley 3 is driven by the outer surface of the power transmission belt 7. If in a conventional arrangement, the fan pulley 3 is a flat pulley, then the belt is liable to transverse shift. More specifically, when the crank pulley 2 is rotated in the direction of the arrow, the power steering pulley 4 and the crank pulley 2, located respectively upstream of and downstream of the fan pulley 3 which is driven by the outer surface of the belt 7, do not cause the belt 7 to shift transversely because the pulleys 2 and 4 are driven by the inner surface of the belt 7. However, if the fan belt 3 driven by the outer surface of the belt 7 is a flat pulley, then the belt 7 is transversely shifted at the fan pulley 3, and the belt 7 thus shifted is moved to the crank pulley 2. As a result of which the belt 7 is non-uniformly worn or causes abnormal sounds, and in an extreme condition comes off the pulley.

The power transmission belt 7 in one form, constructed in accordance with this invention is as shown in Fig. 2 which shows a ribbed belt 7A on the pulley 2, the belt, comprising a tension section 9, a neutral axis section 10 and a compression section 11. The tension section 9 is made of rubbered fabric and extensible rubber 14. The upper surface of the tension section 9, that is the outer surface 12 of the belt, is flat. In the neutral axis section 10, a twisted polyester or aromatic polyamide cord 15 is spirally wound. The compression section 11 has a plurality of ribs 17 arranged longitudinally of the belt. Each rib 17 has a triangular section as viewed in the direction of the width of the belt. Thus, the inner surface 16 of the belt can closely fit in the grooves of the pulley 2.

Figs. 3 shows a banded belt 7C different from the belt shown in Fig. 2. In belt 7C, the upper surfaces of a plurality of V-belt bodies 19 having a trapezoid section, are connected with a tie band 20 of rubbered fabric or rubbered cord fabric.

This banded belt therefore has ribs 17C having a trapezoidal section as viewed in the direction of the width of the belt.

Fig. 2 is intended to show the state of the crank pulley 2, or the power steering pulley 4, alternator pulley 5 or coolant pump pulley 6 which is driven by the inner surface of the belt 7.

Each of the pulleys 2, 4, 5 and 6 has V-shaped grooves 22 in the outer surface which mate with the ribs 17 of the ribbed belt 7A. It should be noted that each V-shaped groove 22 is not completely filled with the rib 17. That is, there is a small amount of space 23 at the root of the rib or on the top of the protrusion of the V-shaped groove, whereby the power transmission capability is improved.

Fig. 4 is a sectional view taken along line Y—Y' showin g a state of the fan pulley 3 driven by the outer surface of the belt. The pulley 3 has a plurality of protrusions 27, 0.5—3.0 mm higher than the bottom surface in axially spaced circumferential positions on the surface of the pulley. The pulley 3 has flanges 28 and 29, 1—10 mm higher than the protrusions 27 on both sides of the pulley. The shapes of the protrusions 27 of the pulley 3 are semi-circular in section and this protects the outer surface 12 of the belt from being damaged or cracked. It is necesary to bring the outer surface 12 of the belt in close contact with the pulley 3. In this case, the protrusions 27 of the pulley are engaged with the outer surface 12 of the belt. As a result, transverse shifting of the belt can be prevented, and the flanges 28 and 29 also assist in preventing the belt from coming off the pulley.

As is apparent from the above description, that the problems of non-uniform wear, generation of abnormal sound, and disengagement of the belt, caused by transversely shifting of the belt, can be positively prevented. Thus, the drive system constructed in accordance with the invention is effective as a drive system for an automobile or the equivalent.

**Claims**

1. A drive system including a driving pulley (2), a plurality of driven pulleys (3, 4, 5, 6), and an endless power transmission belt (7) having outer and inner surfaces said belt being laid in a serpentine state over said pulleys, the driving pulley (2) and at least one driven pulley (4, 5 or 6) being in contact with the inner surface of said power transmission belt (7), said pulleys (4, 5 and 6) in contact with the inner surface having a plurality of V-grooves (22) arranged circumferentially, each of said V-grooves engaged by ribs (17) formed on the inner surface of said belt (7), and the remaining pulley (3) or pulleys engaging with the outer surface of said power transmission belt, characterised in that the or each of said remaining pulleys (3) which engage the outer surface of the belt (7) has a plurality of axially spaced circumferential projections (27) on its belt engaging surface, said projections (27) being of semi-circular cross-sectional shape and the outer surface of the belt (7) engaging therewith being initially substantially flat.

2. A drive system as claimed in Claim 1, characterised in that the shafts of said driving pulley and said plurality of driven pulleys are in parallel with one another.

3. A drive system as claimed in Claim 1, characterised in that the height of said protrusions (27) is in the range from 0.5 mm to 3.0 mm.

4. A drive system as claimed in any one of the preceding claims characterised in that the driven pulley (3) or pulleys on which the outer surface of the belt engages have flanges (28, 29) higher than the top of said protrusions, at both sides of said pulley.

5. A drive system as claimed in Claim 4 characterised in that said flanges (28, 29) are 1 to 10 mm higher than the top of said protrusions (27).

6. A drive system as is claimed in any one of the preceding claims characterised in that said power transmission belt (7) is a ribbed belt comprising a tension section, a neutral axis section and a compression section, said tension section forming the initially flat outer surface of said belt, said compression section having a plurality ribs (17) arranged longitudinally thereof.

7. A drive system as claimed in any one of the preceding claims characterised in that said power transmission belt (7) is a banded belt comprising a plurality of V-belt bodies having section corresponding with the grooves in the pulleys (4, 5, 6) engaging the inner surface of the belt, the V-belt bodies being arranged in parallel and separately from one another, and a tie band (12) of rubbered fabric or rubbered cord fabric laid over the upper surfaces of said V-belt bodies to connect the latter.

8. A drive system as claimed in any one of the preceding claims characterised by a tension device (8) for adjusting the tension of said power transmission belt (7) at least at one position between said pulleys.

**Revendications**

1. Système d'entraînement comprenant une poulie motrice (2), plusieurs poulies menées (3, 4, 5, 6) et une courroie sans fin (7) de transmission de force motrice comprenant des surfaces extérieures et intérieures, ladite poulie étant posée dans un état sinueux sur lesdites poulies, la poulie motrice (2) est au moins une poulie menée (4, 5 ou 6) étant en contact avec la surface intérieure de ladite courroie (7) de transmission de force motrice, lesdites poulies (4, 5 et 6) en contact avec la surface intérieure comportant plusieurs gorges en V 22 disposées circonférentiellement, chacune desdites gorges en V étant engagée par des nervures 17 formées sur la surface intérieure de ladite courroie (7), et l'autre poulie (3) ou les autres poulies étant en contact avec la surface extérieure de ladite courroie de transmission de force motrice, caractérisé en ce que la ou chacune des autres poulies (3) qui engage la surface extérieure de la courroie (7) comporte plusieurs parties en saillie (27 circonférentielles espacées axialement sur sa surface d'engagement de courroie, lesdites parties en saillie (27) ayant une section transversale semi-circulaire et la surface extérieure de la courroie (7) en contact avec elles étant initialement pratiquement plate.

2. Système d'entraînement selon la revendication 1, caractérisé en ce que les arbres de ladite poulie motrice et desdites plusieurs poulies menées sont parallèles entre eux.

3. Système d'entraînement selon la revendication 1, caractérisé en ce que la hauteur desdites parties en saillie (27) est de l'ordre de 0,5 mm à 3,0 mm.

4. Système d'entraînement selon l'une quelconque des revendications précédentes, caractérisé en ce que la poulie menée (3) ou les poulies sur lesquelles s'engage la surface extérieure de la courroie comportent des joues (28, 29) plus hautes que le sommet desdites parties en saillie sur les deux côtés de ladite poulie.

5. Système d'entraînement selon la revendication (4), caractérisé en ce que lesdites joues (28, 29) sont de 1 à 10 mm plus hautes que le sommet desdites parties en saillie (27).

6. Système d'entraînement selon l'une quelconque des revendications précédentes, caractérisé en ce que ladite courroie (7) de transmission de puissance est une courroie nervurée comprenant une section sous tension, une section d'axe neutre et une section sous compression, ladite section sous tension formant la surface extérieure initialement plane de ladite courroie, ladite section de compression comportant plusieurs nervures (17) disposées dans sa direction longitudinale.

7. Système d'entraînement selon l'une des revendications précédentes, caractérisé en ce que ladite courroie (7) de transmission de force motrice est une courroie cannelée comprenant plusieurs corps de courroie en V avec des sections correspondant aux gorges dans les poulies (4, 5, 6) en contact avec la surface intérieure de la courroie, les corps de courroie en V étant disposés parallèlement et séparément les uns des autres et une bande de liaison (12) de tissu caoutchouté ou de tissu de corde caoutchoutée étant posé sur les surfaces supérieures desdits corps de courroies en V pour les assembler.

8. Système d'entraînement selon l'une quelconque des revendications précédentes, caractérisé par un dispositif de tension (8) pour régler la tension de ladite courroie (7) de transmission de force motrice en au moins une position entre lesdites poulies.

**Patentansprüche**

1. Antriebssystem mit einer antriebenden Scheibe (2), einer Vielzahl von angetriebenen Scheiben (3, 4, 5, 6) und einem Endlos-Kraftübertragungsriemen (7) mit einer Innen- und einer Außenfläche, welcher Riemen in einem serpentinenförmigen Zustand über die Scheiben gelegt ist, wobei die antreibende Scheibe (2) und zumindest eine angetriebene Scheibe (4, 5 oder 6) in Berührung mit der Innenfläche des Kraftübertragungsriemens (7) steht und die mit der Innenfläche in Berührung stehenden Scheiben (4, 5 und 6) eine Vielzahl von V-Nuten (22) haben, die über den Umfang angeordnet sind und von denen jede mit auf der Innenfläche des Riemens (7) ausgebildeten Rippen (17) in Berührung steht, und wobei die verbleibende Scheibe (7) oder Scheiben mit der Außenfläche des Kraftübertragungsriemens in Eingriff stehen, dadurch gekennzeichnet, daß die oder jede der verbleibenden Scheiben (3), die mit der Außenfläche des Riemens (7) in Berührung steht, eine Vielzahl von axial beabstandeten Umfangsvorsprüngen (27) auf der mit dem Riemen in Eingriff stehenden Fläche aufweist, bzw. aufweisen, welche Vorsprünge (27) eine halbkreisförmige Querschnittsform aufweisen, und daß die damit im Eingriff stehende Außenfläche des Riemens (7) anfänglich im wesentlichen eben ist.

2. Antriebssystem nach Anspruch 1, dadurch gekennzeichnet, daß die Wellen der antriebenden Scheibe und die Vielzahl von angetriebenen Scheiben parallel zueinander angeordnet sind.

3. Antriebssystem nach Anspruch 1, dadurch gekennzeichnet, daß die Höhe der genannten Vorsprünge (27) im Bereich von 0,5 mm bis 3,0 mm liegt.

4. Antriebssystem nach irgendeinem der vorhergehenden Ansprüche, dadurch gekennzeichnet, daß die angetriebene Scheibe (3) oder Scheiben, mit denen die Außenfläche des Riemens im Eingriff steht, Flansche (28, 29) haben, die höher sind als die Oberseite der Vorsprünge, und zwar an beiden Seiten der Scheibe.

5. Antriebssystem nach Anspruch 4, dadurch gekennzeichnet, daß die genannten Flansche (28, 29) bis 10 mm höher sind als die Oberseite der genannten Vorsprünge (27).

6. Antriebssystem nach irgendeinem der vorhergehenden Ansprüche, dadurch gekennzeichnet, daß der Kraftübertragungsriemen (7) ein gerippter Riemen mit einem Zugspannungsabschnitt, einem Neutralachsenabschnitt und einem Druckspannungsabschnitt ist, wobei der Zugspannungsabschnitt die anfänglich ebene Außenfläche des Riemens bildet und der Druckspannungsabschnitt eine Vielzahl von Rippen (17) hat, die in Längsrichtung darauf angeordnet sind.

7. Antriebssystem nach irgendeinem der vorhergehenden Ansprüche, dadurch gekennzeichnet, daß der Kraftübertragungsriemen (7) ein lagenförmiger Verbundriemen mit einer Vielzahl von V-Riemenkörpern ist, daß diese V-Riemenkörper einen Querschnitt entsprechend in den Scheiben (4, 5, 6) befindlichen Nuten haben, die mit der Innenfläche des Riemens im Eingriff stehen, daß die V-Riemenkörper parallel und getrennt voneinander angeordnet sind, und daß ein Verbindungszugband (12) aus gummierter Textilware oder gummierter Cord-Textilware auf die oberseitigen Flächen der genannten V-Riemenkörper gelegt sind, um diese miteinander zu verbinden.

8. Antriebssystem nach irgendeinem der vorhergehenden Ansprüche, gekennzeichnet durch eine Spannvorrichtung zum Einstellen der Spannung des Kraftübertragungsriemens (7) an zumindest einer Stelle zwischen den Scheiben.

**FIG. 1**

**FIG. 2**

**FIG. 3**

**FIG. 4**

1